# EUROPEAN PATENT SPECIFICATION

(11) **EP 3 269 782 B1**
(45) Date of publication and mention of the grant of the patent: **09.02.2022**
(21) Application number: 16764898.9
(22) Date of filing: 11.03.2016
(51) Int. Cl.: C09D 11/34, B41J 2/01, B41M 5/00, C09D 11/36, C09D 11/38, C09D 11/101, C09D 11/12

(54) **ACTINIC RAY-CURABLE INKJET INK CONTAINIMG TWO WAXES FORMING EUTECTIC AND INKJET RECORDING METHOD**
MITTELS AKTINISCHER STRAHLUNG HÄRTBARE TINTENSTRAHLTINTE MIT ZWEI WACHSEN ZUR FORMUNG EINES EUTEKTIKUMS UND TINTENSTRAHLDRUCKVERFAHREN
ENCRE DURCISSABLE PAR RAYONNEMENT ACTINIQUE POUR JET D'ENCRE COMPRENANT DEUX CIRES QUI FORMENT UN EUTECTIQUE ET PROCÉDÉ D'IMPRESSION PAR JET D'ENCRE

(30) Priority: 13.03.2015 JP 2015050968
(43) Date of publication of application: 17.01.2018
(73) Proprietor: Konica Minolta, Inc., Tokyo 100-7015 (JP)
(72) Inventor: NISHIYAMA, Hiromichi, Tokyo, 100-7015 (JP)
(74) Representative: Henkel & Partner mbB
(86) International application number: PCT/JP2016/057800
(87) International publication number: WO 2016/148068

(56) References cited:
- EP-A1- 2 692 804
- EP-A1- 2 835 265
- EP-A1- 3 235 885
- WO-A1-2011/136009
- WO-A1-2012/132406
- WO-A1-2015/033584
- WO-A1-2017/163564
- JP-A- 2002 256 189
- JP-A- 2004 091 767
- JP-A- 2011 057 900

## Description

### Technical Field

The present invention relates to an actinic ray-curable inkjet ink containing two waxes forming a eutectic, and to an inkjet recording method.

### Background Art

The image forming method using the inkjet recording method is a method of forming images with ink supplied from an ink tank through a flow channel and ejected from an ejection recording head. The inkjet recording method is used for forming various images because it can form images easily and inexpensively. An actinic ray-curable inkjet ink is one of the inks used in the inkjet recording method. The actinic ray-curable inkjet ink contains a photopolymerizable compound in addition to the colorant. Therefore, the components of the ink can be cured by applying actinic rays such as ultraviolet rays to polymerize the photopolymerizable compound. When the actinic ray-curable inkjet ink is used to form images, the ejected ink is easier to fix than solvent-based ink compositions, so that images with less bleeding can be formed on various recording media.

In order to enhance the pinning properties of an ultraviolet-curable inkjet ink, for example, an ultraviolet-curable inkjet ink containing a gelling agent such as a wax has been developed. Concerning a recording method using such an ink, studies have been conducted on a technique for preventing color mixing and dot coalescence and forming higher-quality images by gelling ink droplets simultaneously with the landing of the ink on the recording medium.

For example, an inkjet ink is known in which a combination of a ketone wax and an ester wax is used as a gelling agent (Patent Literature 1). In the invention, several waxes are used in combination to achieve both good pinning properties and good ejectability. However, the invention is intended to use the ink at normal printing temperature and not intended to perform printing under low substrate temperature conditions.

Also, there is known a method of forming high-quality images by allowing heating means and pressurizing means to act on an inkjet ink containing a kind of gelling agent (Patent Literature 2). In this method, the substrate temperature is 5°C to 15°C lower than the gelling temperature of the ink, and the temperature used in the examples is also widely ranging from 38°C to 72°C, which are relatively high temperatures. Therefore, the ink disclosed in this literature is not intended for use in printing at low substrate temperature.

Patent Literature 3 discloses a white actinic radiation-curable inkjet ink having good curability, the actinic radiation-curable inkjet ink comprising a photocurable compound, a photoinitiator, a gelling agent and a white pigment. The gelling agent may comprise two or more gelling agents particularly selected from the classes of ketone waxes of the general formula R¹-CO-R² and fatty acid esters of the general formula R³-COO-R⁴, wherein each of R¹ to R⁴ independently represents an alkyl group with a straight-chain moiety having 12 to 26 carbon atoms.

Patent Literature 4 teaches an actinic radiation-curable inkjet ink having excellent ejection stability, the actinic radiation-curable inkjet ink comprising a photopolymerizable compound, a photoinitiator and a gelling agent. The gelling agent may particularly comprise an aliphatic ketone compound of the general formula R¹-CO-R² or an aliphatic ester compound of the general formula R³-COO-R⁴, wherein each of R¹ to R⁴ independently represents a hydrocarbon group with a straight-chain moiety having 12 or more carbon atoms.

Patent Literature 5 relates to an actinic radiation-curable inkjet ink having high pinning properties with little degradation of appearance after curing, the actinic radiation-curable inkjet ink comprising a photopolymerizable compound, a wax, a photoinitiator and a colorant. Preferably, the wax comprises an aliphatic ketone compound or/and an aliphatic monoester compound.

Patent Literature 6 describes an actinic radiation-curable inkjet ink having a balance between high pinning property and high ejectability, the actinic radiation-curable inkjet ink comprising an actinic ray-curable compound, a ketone wax and an ester wax. Preferably, the ketone wax is compound of the general formula R¹-CO-R², and the ester wax is a compound of the general formula R³-COO-R⁴, wherein each of R¹ to R⁴ independently represents an aliphatic hydrocarbon group with a straight-chain moiety having 9 to 25 carbon atoms.

### Citation List

### Patent Literature

Patent Literature 1: WO 2012/132406 A
Patent Literature 2: WO 2013/118500 A
Patent Literature 3: EP 3 235 885 A1
Patent Literature 4: WO 2015/033584 A1
Patent Literature 5: EP 2 835 265 A1
Patent Literature 6: EP 2 692 804 A1

### Summary of Invention

### Technical Problem

In recent years, attention has been focused on a technique for printing at low substrate temperature for the purpose of reducing energy consumption and expanding the variety of substrates. However, there is a problem in that when a conventional actinic ray-curable inkjet ink containing a wax as a gelling agent is used in low-temperature printing, the wax crystallized in the landed ink can precipitate at too high a rate so that the ink dots can form relatively large irregularities. In order to lower the precipitation rate of the wax crystals, it is necessary to lower the gelation temperature. However, the wax having a low gelation temperature can precipitate and crystallize on the print surface after the curing of the ink, so that a phenomenon called blooming can occur, in which the print surface has a powdered appearance. Therefore, high-quality images are difficult to obtain by low-temperature printing using the conventional actinic ray-curable inkjet ink.

The present invention has been made in view of the above circumstances, and it is an object of the present invention to provide an actinic ray-curable inkjet ink that makes it possible to produce prints with high character quality, high image quality, and less blooming even when the printing is performed at low substrate temperature. The invention is defined by the claims.

### Solution to Problem

In a first aspect, the present invention is thus directed to an actinic ray-curable inkjet ink as defined in claim 1. The actinic ray-curable inkjet ink includes an actinic ray-curable compound, a photopolymerization initiator, a wax A, and a wax B, wherein the waxes A and B each have at least one alkyl chain containing a linear portion, the linear portion of each alkyl chain in the waxes A and B has 15 or more carbon atoms, the wax A has a saturation solubility of 0.4% in the actinic ray-curable compound at a temperature in the range of 40 to 50°C, and the wax B forms a eutectic with the wax A,
with the proviso that the actinic ray-curable inkjet ink is not an actinic ray-curable inkjet ink consisting of 0.5% by weight of distearyl ketone, 1.0% by weight of ethylene glycol distearate, 15.0% by mass of 3PO-modified trimethylolpropane triacrylate, 20.0% by mass of polyethylene glycol 400 diacrylate, 42.6% by mass of 6EO-modified trimethylolpropane triacrylate, 0.1% by mass of bis(2,2,6,6-tetramethyl-1-piperidinyloay-4-yl)sebacate, 6.0% by mass of diphenyl(2,4,6-trimethylbenzoyl)phosphine oxide, 3.0% by mass of phenylbis(2,4,6-trimethylbenzoyl)phosphine oxide, 0.1% by mass of a polyether-modified silicone fluid having a viscosity of 1600 mm²/s at 25°C, a specific gravity of 1.03 g/cm³ at 25°C, a refractive index n_{D}²⁵ of 1.446, a cloud point of 35°C and a HLB value of 7 (KF-352), and 11.7% by mass of a pigment dispersion prepared from 71 parts by weight of tripropylene glycol diacrylate, 60 parts by weight of titanium oxide and 9 parts by weight of a comb-shaped block copolymer having tertiary amine groups, an amine value of 18 mg KOH/g, an acid value of 8 mg KOH/g, and a density of 1.1 g/ml at 20°C (BYKJET^{®}-9151).

In a second aspect, the present invention is directed to an inkjet recording method as defined in claim 7. The inkjet recording method includes:
a step of ejecting the actinic ray-curable inkjet ink of the first aspect onto a recording medium; and
a step of applying actinic rays to the ink ejected on the recording medium to cure the ink, wherein the recording medium has a temperature in the range of 25°C to 40°C.

### Advantageous Effects of Invention

According to the present invention, two waxes that form a eutectic are used as a gelling agent, which makes it possible to provide an actinic ray-curable inkjet ink that allows printing with high image quality, high character quality, and less blooming even when the printing is performed at a low substrate temperature of 15°C to 40°C.

### Brief Description of Drawings

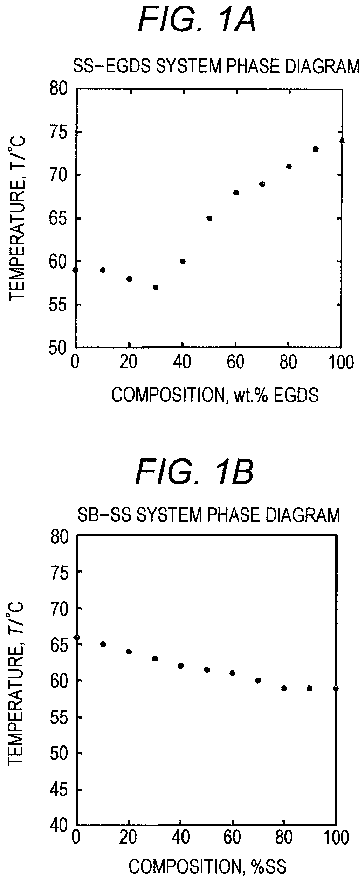

Fig. 1 includes (A) which is a phase diagram of stearyl stearate (SS) and ethylene glycol distearate (EGDS) capable of forming a eutectic, and (B) which is a phase diagram of stearyl stearate and behenyl stearate (SB) not capable of forming a eutectic.

### Description of Embodiments

### 1. Actinic ray-curable inkjet ink

The actinic ray-curable inkjet ink of the present invention includes an actinic ray-curable compound, a photopolymerization initiator, and two waxes that form a eutectic.

### [Actinic ray-curable compound]

The actinic ray-curable compound is a photopolymerizable compound capable of being crosslinked or polymerized by actinic rays. Examples of the actinic rays include electron beams, ultraviolet rays, α rays, γ rays, and X rays, among which ultraviolet rays and electron beams are preferred. The actinic ray-curable compound is a radically polymerizable compound or a cationically polymerizable compound, and is preferably a radically polymerizable compound.

The radically polymerizable compound is a radically-polymerizable, ethylenically-unsaturated-bond-containing compound (monomer, oligomer, polymer, or any mixture thereof). Radically polymerizable compounds may be used alone or in combination of two or more.

Examples of the radically-polymerizable, ethylenically-unsaturated-bond-containing compound include unsaturated carboxylic acids and salts thereof, unsaturated carboxylic acid ester compounds, unsaturated carboxylic acid urethane compounds, unsaturated carboxylic acid amide compounds and anhydrides thereof, acrylonitrile, styrene, unsaturated polyesters, unsaturated polyethers, unsaturated polyamides, and unsaturated urethanes. Examples of unsaturated carboxylic acids include (meth)acrylic acid, itaconic acid, crotonic acid, isocrotonic acid, and maleic acid.

Among them, the radically polymerizable compound is preferably an unsaturated carboxylic acid ester compound, more preferably a (meth)acrylate. The (meth)acrylate may be not only a monomer as described later but also an oligomer, a mixture of a monomer and an oligomer, a modified compound, or an oligomer having a polymerizable functional group.

Examples of the (meth)acrylate include monofunctional monomers such as isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxyethyl hexahydrophthalate, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethyl succinate, 2-(meth)acryloyloxyethyl phthalate, 2-(meth)acryloyloxyethyl-2-hydroxyethyl phthalate, and tert-butylcyclohexyl (meth)acrylate; bifunctional monomers such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A-PO adduct di(meth)acrylate, hydroxypivalic acid neopentyl glycol di(meth)acrylate, and polytetramethylene glycol di(meth)acrylate; and tri- or polyfunctional monomers such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritol ethoxy tetra(meth)acrylate.

In view of photosensitivity and other effects, the (meth)acrylate is preferably, for example, stearyl (meth)acrylate, lauryl (meth)acrylate, isostearyl (meth)acrylate, ethoxydiethylene glycol (meth)acrylate, isobornyl (meth)acrylate, tetraethylene glycol di(meth)acrylate, or glycerin propoxy tri(meth)acrylate.

The (meth)acrylate may also be a modified compound. Examples of the modified compound include ethylene oxide-modified (meth)acrylates such as ethylene oxide-modified trimethylolpropane tri(meth)acrylate and ethylene oxide-modified pentaerythritol tetraacrylate; caprolactone-modified (meth)acrylates such as caprolactone-modified trimethylolpropane tri(meth)acrylate; and caprolactam-modified (meth)acrylates such as caprolactam-modified dipentaerythritol hexa(meth)acrylate.

In the present invention, one or more actinic ray-curable compounds may be used, at least one of which is preferably an ethylene oxide-modified (meth)acrylate. This is because the ethylene oxide-modified (meth)acrylate has high photosensitivity and can easily form a card house structure (described later) when the ink forms a gel at low temperature. In addition, the ethylene oxide-modified (meth)acrylate is easily soluble in other ink components at high temperature and less likely to cause shrinkage upon curing, which makes print curling less likely to occur.

Examples of the ethylene oxide-modified (meth)acrylate include 4 EO-modified hexanediol diacrylate CD561, 3 EO-modified trimethylolpropane triacrylate SR454, 6 EO-modified trimethylolpropane triacrylate SR499, and 4 EO-modified pentaerythritol tetraacrylate SR494 manufactured by Sartomer; polyethylene glycol diacrylate NK Ester A-400, polyethylene glycol diacrylate NK Ester A-600, polyethylene glycol dimethacrylate NK Ester 9G, and polyethylene glycol dimethacrylate NK Ester 14G manufactured by Shin-Nakamura Chemical Co., Ltd.; tetraethylene glycol diacrylate V #335 HP manufactured by Osaka Organic Chemical Industry Ltd.; 3PO-modified trimethylolpropane triacrylate Photomer 4072 manufactured by Cognis Corporation; and 1,10-decanediol dimethacrylate NK Ester DOD-N, tricyclodecanedimethanol diacrylate NK Ester A-DCP, and tricyclodecanedimethanol dimethacrylate NK Ester DCP manufactured by Shin-Nakamura Chemical Co., Ltd.

The (meth)acrylate may also be a polymerizable oligomer. Examples of such a polymerizable oligomer include epoxy(meth)acrylate oligomers, aliphatic urethane (meth)acrylate oligomers, aromatic urethane (meth)acrylate oligomers, polyester (meth)acrylate oligomers, and linear (meth)acrylic oligomers.

The cationically polymerizable compound may be, for example, any of an epoxy compound, a vinyl ether compound, and an oxetane compound. The cationically polymerizable compounds may be used alone or in combination of two or more.

The epoxy compound is, for example, an aromatic epoxide, an alicyclic epoxide, or an aliphatic epoxide, among which an aromatic epoxide and an alicyclic epoxide are preferred for enhancing the curability.

The aromatic epoxide may be a di- or polyglycidyl ether obtained by reacting a polyhydric phenol or an alkylene oxide adduct thereof with epichlorohydrin. Examples of the polyhydric phenol or the alkylene oxide adduct thereof to be reacted include bisphenol A or an alkylene oxide adduct thereof. The alkylene oxide in the alkylene oxide adduct may be, for example, ethylene oxide or propylene oxide.

The alicyclic epoxide may be a cycloalkane oxide-containing compound obtained by epoxidizing a cycloalkane-containing compound with an oxidizing agent such as hydrogen peroxide or a peracid. The cycloalkane in the cycloalkane oxide-containing compound may be cyclohexene or cyclopentene.

The aliphatic epoxide may be a di- or polyglycidyl ether obtained by reacting an aliphatic polyhydric alcohol or an alkylene oxide adduct thereof with epichlorohydrin. Examples of the aliphatic polyhydric alcohol include alkylene glycols such as ethylene glycol, propylene glycol, and 1,6-hexanediol. The alkylene oxide in the alkylene oxide adduct may be, for example, ethylene oxide or propylene oxide.

Examples of the vinyl ether compound include monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-o-propylene carbonate, dodecyl vinyl ether, diethylene glycol monovinyl ether, and octadecyl vinyl ether; and di- or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether. Among these vinyl ether compounds, di- or trivinyl ether compounds are preferred in view of curability, adhesiveness, and other properties.

The oxetane compound is an oxetane ring-containing compound, examples of which include the oxetane compounds described in JP 2001-220526 A, JP 2001-310937 A, and JP 2005-255821 A. In particular, the oxetane compound should be the compound of Formula (1) in paragraph number 0089 of JP 2005-255821 A, the compound of Formula (2) in paragraph number 0092 of the same publication, the compound of Formula (7) in paragraph number 0107 of the same publication, the compound of Formula (8) in paragraph number 0109 of the same publication, or the compound of Formula (9) in paragraph number 0116 of the same publication. Formulas (1), (2), and (7) to (9) shown in JP 2005-255821 A are shown below.

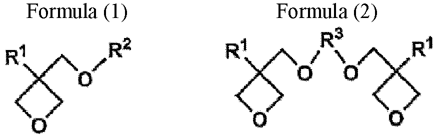

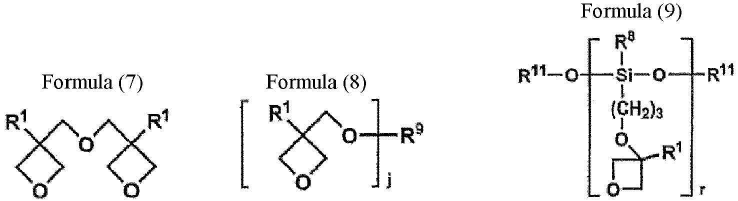

The content of the actinic ray-curable compound in the actinic ray-curable inkjet ink is preferably from 1 to 97% by mass, more preferably from 30 to 95% by mass.

### [Photopolymerization initiator]

The photopolymerization initiator contained in the actinic ray-curable inkjet ink may be a radical photopolymerization initiator or a cationic photopolymerization initiator, and the radical photopolymerization initiator may be of an intramolecular bond cleavage type or an intramolecular hydrogen withdrawing type. Examples of the intramolecular bond cleavage type photopolymerization initiator include acetophenones such as diethoxyacetophenone, 2-hydroxy-2-methyl-1-phenylpropan-1-one, benzyl dimethyl ketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexyl phenyl ketone, 2-methyl-2-morpholino(4-thiomethylphenyl)propan-1-one, and 2-benzyl-2-dimethylamino-1-(4-morpholinophenyl)-butanone; benzoins such as benzoin, benzoin methyl ether, and benzoin isopropyl ether; acylphosphine oxides such as 2,4,6-trimethylbenzoin diphenylphosphine oxide; and benzil and methylphenylglyoxyester.

Examples of the intramolecular hydrogen withdrawing type photopolymerization initiator include benzophenones such as benzophenone, methyl o-benzoylbenzoate-4-phenylbenzophenone, 4,4'-dichlorobenzophenone, hydroxybenzophenone, 4-benzoyl-4'-methyl-diphenylsulfide, acrylated benzophenone, 3,3 ',4,4'-tetra(tert-butylperoxycarbonyl)benzophenone, and 3,3'-dimethyl-4-methoxybenzophenone; thioxanthones such as 2-isopropylthioxanthone, 2,4-dimethylthioxanthone, 2,4-diethylthioxanthone, and 2,4-dichlorothioxanthone; aminobenzophenones such as Michler's ketone and 4,4'-diethylaminobenzophenone; and 10-butyl-2-chloroacridone, 2-ethylanthraquinone, 9,10-phenanthrenequinone, and camphorquinone.

The cationic photopolymerization initiator may be a photoacid generator. The photoacid generator may be a compound used for chemically amplified photoresists or photo-cationic polymerization (see "Organic Materials for Imaging," edited by The Japanese Research Association for Organic Electronics Materials, Bunshin Publishing (1993), pages 187-192).

The content of the photopolymerization initiator in the actinic ray-curable inkjet ink is preferably from 0.01% by mass to 10% by mass, although it depends on, for example, the type of actinic rays and the type of the actinic ray-curable compound.

The actinic ray-curable inkjet ink may further contain, for example, a photopolymerization initiator aid and a polymerization inhibitor, if necessary. The photopolymerization initiator aid may be a tertiary amine compound, preferably an aromatic tertiary amine compound. Examples of the aromatic tertiary amine compound include N,N-dimethylaniline, N,N-diethylaniline, N,N-dimethyl-p-toluidine, ethyl N,N-dimethylamino-p-benzoate, isoamylethyl N,N-dimethylamino-p-benzoate, N,N-dihydroxyethylaniline, triethylamine, and N,N-dimethylhexylamine. Among them, ethyl N,N-dimethylamino-p-benzoate and isoamylethyl N,N-dimethylamino-p-benzoate are preferred. These compounds may be used alone or in combination of two or more.

Examples of the polymerization inhibitor include (alkyl)phenol, hydroquinone, catechol, resorcin, p-methoxyphenol, tert-butylcatechol, tert-butylhydroquinone, pyrogallol, 1,1-picrylhydrazyl, phenothiazine, p-benzoquinone, nitrosobenzene, 2,5-di-tert-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutyl cresol, cyclohexanone oxime cresol, guaiacol, o-isopropyl phenol, butyraldoxime, methyl ethyl ketoxime, and cyclohexanone oxime.

### [Wax]

The actinic ray-curable inkjet ink of the present invention contains two waxes, waxes A and B. The waxes contained in the actinic ray-curable inkjet ink of the present invention have at least one alkyl chain. In general, waxes have one to four alkyl chains. In the present invention, the linear portion of each alkyl chain of each wax must have 15 or more carbon atoms. If this condition is not satisfied, the waxes will have too high a solubility for use in the present invention. In such a case, the resulting ink can cause blooming during printing at low temperature, and also can reduce character quality. The linear portion of each alkyl chain preferably has 15 to 25 carbon atoms, more preferably 16 to 22 carbon atoms. If the linear portion has more than 25 carbon atoms, the waxes can have too low solubility (too high gelation temperature), so that the resulting print can have relatively high streakiness.

Examples of the waxes used in the actinic ray-curable inkjet ink of the present invention include higher fatty acids, higher alcohols, fatty acid esters, fatty acid amines, aliphatic ketones, and fatty acid amides. Preferably, the waxes are fatty acid esters or aliphatic ketones.

In the sol-gel phase transition type ink, the waxes need to be at least 1) soluble in the actinic ray-curable compound at a temperature higher than the gelation temperature and 2) crystallized in the ink at a temperature equal to or lower than the gelation temperature.

When the waxes are crystallized in the ink, plate crystals as a product of crystallization of the waxes should preferably form a three-dimensionally surrounded space, and the actinic ray-curable compound should preferably be encapsulated in the space. The structure in which the actinic ray-curable compound is encapsulated in the space three-dimensionally surrounded by the plate crystals is sometimes referred to as a "card house structure". The formation of the card house structure makes it possible to hold the actinic ray-curable compound in a liquid state and to pin the ink droplets. This makes it possible to suppress coalescence of the droplets. In order to form the card house structure, the waxes and the actinic ray-curable compound dissolved in the ink are preferably compatibilized with one another. On the other hand, if the waxes and the actinic ray-curable compound dissolved in the ink form separate phases, it may be difficult to form a card house structure.

An aliphatic diketone as a wax is, for example, a compound of Formula (G1) below.

Formula (G1): R1-CO-R2

In Formula (G1), R1 and R2 are each independently an aliphatic hydrocarbon group containing a linear portion of 15 to 25 carbon atoms. The aliphatic hydrocarbon group may be a saturated or unsaturated aliphatic hydrocarbon group. The saturated or unsaturated aliphatic hydrocarbon group may be a branched or linear aliphatic hydrocarbon group. In order to obtain high crystallinity, the aliphatic hydrocarbon group is preferably a linear saturated aliphatic hydrocarbon group (linear alkylene group).

If the linear portion in the aliphatic hydrocarbon group has less than 15 carbon atoms, the wax may have high solubility and may fail to have sufficient crystallinity, so that the wax may fail to function as a gelling agent. On the other hand, if the linear portion in the aliphatic hydrocarbon group has more than 25 carbon atoms, the wax may have too high a melting point, so that the wax may be insoluble in the ink unless the ink ejection temperature is raised. When the linear portion in the aliphatic hydrocarbon group has 15 to 25 carbon atoms, the wax can have a certain level of crystallinity necessary for serving as a gelling agent and form the card house structure, and will not have too high a melting point. The linear portion in the aliphatic hydrocarbon group of each of R1 and R2 preferably has 16 to less than 22 carbon atoms. In particular, therefore, R1 and R2 are each preferably a linear saturated aliphatic hydrocarbon group (linear alkylene group) of 16 to less than 22 carbon atoms.

Examples of the aliphatic hydrocarbon group containing a linear portion of 15 to 25 carbon atoms include docosanyl (C22), icosanyl (C20), octadecanyl (C18), heptadecanyl (C17), hexadecanyl (C16), and pentadecanyl (C15).

A fatty acid ester as a wax is, for example, a compound of formula (G2) below.

Formula (G2): R3-COO-R4

In Formula (G2), R3 and R4 are each independently an aliphatic hydrocarbon group containing a linear portion of 15 to 26 carbon atoms. The aliphatic hydrocarbon group may be a saturated or unsaturated aliphatic hydrocarbon group, and is preferably a saturated aliphatic hydrocarbon group (alkylene group). The saturated aliphatic hydrocarbon group may be a branched or linear saturated aliphatic hydrocarbon group. In order to obtain at least a certain level of crystallinity, the aliphatic hydrocarbon group is preferably a linear saturated aliphatic hydrocarbon group (linear alkylene group).

When the linear portion in the aliphatic hydrocarbon group of each of R3 and R4 has 15 to 26 carbon atoms, the wax can have a certain level of crystallinity necessary for serving as a gelling agent and form the card house structure, and will not have too high a melting point, similarly to the compound of Formula (1). In order to allow the compound of Formula (G2) to have at least a certain level of crystallinity, the linear portion in the aliphatic hydrocarbon group of R3 should preferably have 16 to less than 22 carbon atoms, and the linear portion in the aliphatic hydrocarbon group of R4 should preferably have 16 to less than 22 carbon atoms. In particular, therefore, R3 is preferably a linear alkylene group of 16 to less than 22 carbon atoms, and R4 is preferably a linear alkylene group of 16 to less than 22 carbon atoms.

Examples of the aliphatic hydrocarbon group containing a linear portion of 15 to 26 carbon atoms include those of the aliphatic hydrocarbon group containing a linear portion of 15 to 25 carbon atoms in Formula (G1) above.

Preferred examples of the waxes include aliphatic ketone compounds, such as 18-pentatriacontanone (stearone) and 16-hentriacontanone, (e.g., KAOWAX T1 manufactured by Kao Corporation); aliphatic monoester compounds, such as cetyl palmitate, stearyl stearate, and behenyl behenate, (e.g., UNISTA-M-2222SL (manufactured by NOF CORPORATION), EXCEPARL SS (manufactured by Kao Corporation), EMALEX CC-18 (manufactured by Nihon Emulsion Co., Ltd.), AMREPS PC (manufactured by KOKYU ALCOHOL KOGYO CO., LTD.), EXCEPARL MY-M (manufactured by Kao Corporation), Spermaceti (manufactured by NOF CORPORATION), EMALEX CC-10 (manufactured by Nippon Emulsion Co., Ltd.)); dibenzylidene sorbitols such as 1,3:2,4-bis-O-benzylidene-D-glucitol (GEL ALL D available from New Japan Chemical Co., Ltd.); petroleum waxes such as paraffin wax, microcrystalline wax, and petrolactam; plant waxes such as candelilla wax, carnauba wax, rice wax, Japanese wax, jojoba oil, jojoba solid wax, and jojoba ester; animal waxes such as beeswax, lanolin, and spermaceti wax; mineral waxes such as montan wax and hydrogenated wax; hydrogenated castor oil or hydrogenated castor oil derivatives; modified waxes such as montan wax derivatives, paraffin wax derivatives, microcrystalline wax derivatives, or polyethylene wax derivatives; higher fatty acids such as behenic acid, arachidic acid, stearic acid, palmitic acid, oleic acid, and erucic acid; higher alcohols such as stearyl alcohol and behenyl alcohol; hydroxystearic acid such as 12-hydroxystearic acid; 12-hydroxystearic acid derivatives; fatty acid amides, such as stearic acid amide, behenic acid amide, oleic acid amide, erucic acid amide, ricinoleic acid amide, and 12-hydroxystearic acid amide, (e.g., NIKKA AMIDE series manufactured by Nippon Kasei Chemical Company Limited, ITOWAX series manufactured by Itoh Oil Chemicals Co., Ltd., FATTYAMID series manufactured by Kao Corporation); N-substituted fatty acid amides such as N-stearylstearic acid amide and N-oleylpalmitic acid amide; specialty fatty acid amides such as N,N'-ethylenebisstearylamide, N,N'-ethylenebis-12-hydroxystearylamide, and N,N'-xylylenebisstearylamide; higher amines such as octadecylamine; fatty acid ester compounds, such as stearyl stearate, oleyl palmitate, glycerin fatty acid ester, sorbitan fatty acid ester, propylene glycol fatty acid ester, ethylene glycol fatty acid ester, and polyoxyethylene fatty acid ester, (e.g., EMALLEX series manufactured by Nippon Emulsion Co., Ltd., RIKEMAL series manufactured by RIKEN VITAMIN Co., Ltd., POEM series manufactured by RIKEN VITAMIN Co., Ltd.); sucrose fatty acid esters, such as sucrose stearate and sucrose palmitate, (e.g., RYOTO Sugar Ester series manufactured by Mitsubishi-Chemical Foods Corporation); synthetic waxes such as polyethylene wax and α-olefin-maleic anhydride copolymer wax; and polymerizable waxes (e.g., UNILIN series manufactured by Baker-Petrolite Corporation).

In the present invention, two waxes capable of forming a eutectic are selected from these waxes having an alkyl chain containing a linear portion of 15 or more carbon atoms, and used in combination. The term "eutectic" refers to a phenomenon in which two types of crystals precipitate simultaneously when a mixture solution containing two components is cooled. A mixture that forms a eutectic has a melting point lower than that of each component alone.

A combination of waxes capable of forming a eutectic can be determined using differential scanning calorimetry (DSC). Specifically, two waxes are mixed in various ratios and heated, and then cooled to form samples. The melting point of the samples is measured by DSC. A phase diagram is prepared by plotting the composition of the wax mixture on the horizontal axis and plotting the melting point of each composition on the vertical axis representing temperature. As an example, Fig. 1A is a phase diagram showing that stearyl stearate (SS) and ethylene glycol distearate (EGDS) form a eutectic, in which stearyl stearate has a melting point of about 59°C, ethylene glycol distearate has a melting point of about 74°C, and a composition containing 30% of ethylene glycol distearate (70% of stearyl stearate) has a minimum melting point of about 57°C. The composition at which the minimum melting point is reached corresponds to the eutectic point. On the other hand, the phase diagram (Fig. 1B) of a combination of stearyl stearate and behenyl stearate (SB), which are not capable of forming a eutectic, shows that the gelation temperature varies as the composition varies, and does not show any point at which the melting point reaches a minimum.

In addition to the waxes A and B, the ink of the present invention may contain any other wax. Therefore, for example, a Japanese wax containing a plurality of wax components may also be used as the wax A (or wax B). When such a mixture is used as a wax, for example, the amount of the wax to be added may be determined by preparing a pseudo-binary phase diagram, assuming that the mixture is a type of wax, and determining the wax precipitation behavior from the diagram.

The wax A, one of the two waxes that form a eutectic, has a saturation solubility of 0.4% at a temperature in the range of 40 to 50°C in the actinic ray-curable compound used. The saturation solubility of wax B as the second wax is not limited. Similarly to wax A, however, wax B preferably has a saturation solubility of 0.4% at a temperature in the range of 40 to 50°C. The saturation solubility is the solubility reached when the dissolution of a material in a solvent reaches an equilibrium state. The saturation solubility varies with temperature. The temperature at which the saturation solubility of the wax in the actinic ray-curable compound reaches 0.4% can be determined from a solubility curve. Specifically, various amounts of the wax are added to and dissolved in the actinic ray-curable compound to form samples, which are then heated until the wax is completely dissolved. After the wax is completely dissolved, the samples are cooled while the temperature at which the solid phase starts to precipitate is plotted against the added amount (solubility) of the wax, so that a solubility curve is obtained. The temperature at which the saturation solubility reaches 0.4% can be read from this curve.

If the wax has a saturation solubility of 0.4% at a temperature of less than 40°C, it may cause blooming due to its high solubility. If the wax has a saturation solubility of 0.4% at a temperature of more than 50°C, it may cause printing at 25 to 40°C to produce significantly unusual gloss due to too high a gelation temperature. On the other hand, when the two waxes used satisfy the conditions concerning the saturation solubility, the respective waxes in the ink can precipitate crystals at close temperatures, so that the effect of lowering the gelation temperature by eutectic formation can be easily obtained, which is preferred.

The temperature at which the saturation solubility of the wax reaches 0.4% also varies with the actinic ray-curable compound used to produce the ink. Examples of the wax having a saturation solubility of 0.4% at a temperature in the range of 40 to 50°C include stearyl stearate (41.8°C), ethylene glycol distearate (40.1°C), and behenyl stearate (49.8°C). The parenthesized temperature at which the saturation solubility reaches 0.4% is the value measured using, as a solvent, a mixture solution containing the same additives (the same actinic ray-curable compound, polymerization inhibitor, photopolymerization initiator, and photopolymerization initiator aid) as those used for the preparation of the ink in the examples described herein.

Examples of a combination of the two waxes capable of forming a eutectic and usable in the present invention include a combination of stearyl stearate and ethylene glycol distearate, a combination of ethylene glycol distearate and behenyl stearate, a combination of behenyl stearate and 18-pentatriacontanone, and a combination of ethylene glycol distearate and 18-pentatriacontanone. Among them, a combination of stearyl stearate and ethylene glycol distearate and a combination of ethylene glycol distearate and behenyl stearate are preferred, in each of which the two waxes both satisfy the saturation solubility conditions.

The total content of the waxes A and B in the actinic ray-curable inkjet ink of the present invention is preferably from 0.5% by mass to 10.0% by mass, more preferably from 2.0% by mass to 4.0% by mass. A wax content of less than 0.5% by mass may cause a reduction in character image quality, and a wax content of more than 10% by mass may cause the occurrence of blooming or image quality degradation such as unevenness in gloss or formation of a granular cured film.

In the present invention, the amounts of the waxes A and B may be in any ratio as long as the total content falls within the above range and they can form a eutectic to lower the gelation temperature of the ink. In other words, the ratio between the waxes A and B does not necessarily correspond to the eutectic point at which the solubility reaches a minimum, and the present invention is effective as long as the gelation temperature is lowered using the two waxes in combination. For example, the waxes A and B may be used in a mass ratio of A: B of 2 : 8 to 8 :2.

### [Colorant]

The actinic ray-curable inkjet ink may further contain a colorant, if necessary. The colorant may be a dye or a pigment. Preferably, the colorant is a pigment, which has high weather resistance and good dispersibility in the components of the ink. The pigment is, for example, but not limited to, any of the organic or inorganic pigments of the Color Index numbers shown below.

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144 , 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36. Examples of blue or cyan pigments include Pigment Blue 1, 15, 15:1, 15:2, 15:3, 15:4, 15:6, 16, 17-1, 22, 27, 28, 29, 36, and 60. Examples of green pigments include Pigment Green 7, 26, 36, and 50. Examples of yellow pigments include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193. Examples of black pigments include Pigment Black 7, 28, and 26.

Examples of commercially available pigments include Chromofine Yellow 2080, 5900, 5930, AF-1300, and 2700L, Chromofine Orange 3700L and 6730, Chromofine Scarlet 6750, Chromofine Magenta 6880, 6886, 6891N, 6790, and 6887, Chromofine Violet RE, Chromofine Red 6820 and 6830, Chromofine Blue HS-3, 5187, 5108, 5197, 5085N, SR-5020, 5026, 5050, 4920, 4927, 4937, 4824, 4933GN-EP, 4940, 4973, 5205, 5208, 5214, 5221, and 5000P, Chromofine Green 2GN, 2GO, 2G-550D, 5310, 5370, and 6830, Chromofine Black A-1103, Seika Fast Yellow 10GH, A-3, 2035, 2054, 2200, 2270, 2300, 2400(B), 2500, 2600, ZAY-260, 2700(B), and 2770, Seika Fast Red 8040, C405(F), CA120, LR-116, 1531B, 8060R, 1547, ZAW-262, 1537B, GY, 4R-4016, 3820, 3891, and ZA-215, Seika Fast Carmine 6B1476T-7, 1483LT, 3840, and 3870, Seika Fast Bordeaux 10B-430, Seika Light Rose R40, Seika Light Violet B800 and 7805, Seika Fast Maroon 460N, Seika Fast Orange 900 and 2900, Seika Light Blue C718 and A612, and Cyanine Blue 4933M, 4933GN-EP, 4940, and 4973 (manufactured by Dainichiseika Color & Chemicals Mfg. Co., Ltd.); KET Yellow 401, 402, 403, 404, 405, 406, 416, and 424, KET Orange 501, KET Red 301, 302, 303, 304, 305, 306, 307, 308, 309, 310, 336, 337, 338, and 346, KET Blue 101, 102, 103, 104, 105, 106, 111, 118, and 124, and KET Green 201 (manufactured by DIC Corporation); Colortex Yellow 301, 314, 315, 316, P-624, 314, U10GN, U3GN, UNN, UA-414, and U263, Finecol Yellow T-13 and T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, and USN, Colortex Maroon 601, Colortex Brown B610N, Colortex Violet 600, Pigment Red 122, Colortex Blue 516, 517, 518, 519, A818, P-908, and 510, Colortex Green 402 and 403, and Colortex Black 702 and U905 (manufactured by SANYO COLOR WORKS, Ltd.); Lionol Yellow 1405G, Lionol Blue FG7330, FG7350, FG7400G, FG7405G, ES, and ESP-S (manufactured by TOYO INK CO., LTD.); Toner Magenta E02, Permanent Rubin F6B, Toner Yellow HG, Permanent Yellow GG-02, and Hostapeam Blue B2G (manufactured by Hoechst Industries Ltd.); Novoperm P-HG, Hostaperm Pink E, and Hostaperm Blue B2G (manufactured by Clariant); and Carbon Black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corporation).

The pigment can be dispersed using, for example, any of a ball mill, a sand mill, an attritor, a roll mill, an agitator, a Henschel mixer, a colloid mill, an ultrasonic homogenizer, a pearl mill, a wet jet mill, and a paint shaker. The pigment is preferably dispersed to form pigment particles with an average size of 0.08 to 0.5 µm and a maximum size of preferably 0.3 to 10 µm, more preferably 0.3 to 3 µm. The dispersion of the pigment is adjusted according to the selection of the pigment, the dispersing agent, and the dispersion medium, the dispersion conditions, the filtration conditions, and other factors.

The actinic ray-curable inkjet ink may further contain a dispersing agent in order to enhance the dispersibility of the pigment. Examples of the dispersing agent include hydroxyl group-containing carboxylic acid esters, salts of long-chain polyaminoamides and high molecular weight acid esters, salts of high molecular weight polycarboxylic acids, salts of long-chain polyaminoamides and polar acid esters, high molecular weight unsaturated acid esters, high molecular weight copolymers, modified polyurethanes, modified polyacrylates, polyether ester anionic surfactants, naphthalene sulfonic acid-formaldehyde condensate salts, aromatic sulfonic acid-formaldehyde condensate salts, polyoxyethylene alkyl phosphate esters, polyoxyethylene nonylphenyl ether, and stearylamine acetate. Examples of commercially available dispersing agents include Solsperse series from Avecia and PB series from Ajinomoto Fine-Techno Co., Inc.

The actinic ray-curable inkjet ink may further contain a dispersing aid, if necessary. The dispersing aid may be selected depending on the pigment.

The total amount of the dispersing agent and the dispersing aid is preferably from 1 to 50% by mass based on the amount of the pigment.

The actinic ray-curable inkjet ink may further contain a dispersion medium for dispersing the pigment, if necessary. The ink may contain a solvent as the dispersion medium. However, in order to reduce the residual solvent content of the formed image, the actinic ray-curable compound (particularly, a monomer with a low viscosity) described above should preferably be used as the dispersion medium.

The dye may be, for example, an oil-soluble dye. Examples of the oil-soluble dye include the following various dyes. Examples of magenta dyes include MS Magenta VP, MS Magenta HM-1450, and MS Magenta HSo-147 (all manufactured by Mitsui Toatsu K.K.); AIZENSOT Red-1, AIZEN SOT Red-2, AIZEN SOT Red-3, AIZEN SOT Pink-1, and SPIRON Red GEH SPECIAL (all manufactured by Hodogaya Chemical Co., Ltd.); RESOLIN Red FB 200%, MACROLEX Red Violet R, and MACROLEX ROT5B (all manufactured by Bayer Japan); KAYASET Red B, KAYASET Red 130, and KAYASET Red 802 (all manufactured by Nippon Kayaku Co., Ltd.); PHLOXIN, ROSE BENGAL, and ACID Red (all manufactured by Daiwa Dyestuff Mfg. Co., Ltd.); HSR-31 and DIARESIN Red K (all manufactured by Mitsubishi Chemical Corporation); and Oil Red (manufactured by BASF Japan Ltd.).

Examples of cyan dyes include MS Cyan HM-1238, MS Cyan HSo-16, Cyan HSo-144, and MS Cyan VPG (all manufactured by Mitsui Toatsu K.K.); AIZEN SOT Blue-4 (manufactured by Hodogaya Chemical Co., Ltd.); RESOLIN BR. Blue BGLN 200%, MACROLEX BlueRR, CERES Blue GN, SIRIUS SUPRATURQ. Blue Z-BGL, and SIRIUS SUPRA TURQ. Blue FB-LL 330% (all manufactured by Bayer Japan); KAYASET Blue FR, KAYASET Blue N, KAYASET Blue 814, Turq. Blue GL-5 200, and Light Blue BGL-5 200 (all manufactured by Nippon Kayaku Co., Ltd.); DAIWA Blue 7000 and Oleosol Fast Blue GL (all manufactured by Daiwa Dyestuff Mfg. Co., Ltd.); DIARESIN Blue P (manufactured by Mitsubishi Chemical Corporation); and SUDAN Blue 670, NEOPEN Blue 808, and ZAPON Blue 806 (all manufactured by BASF Japan Ltd.).

Examples of yellow dyes include MS Yellow HSm-41, Yellow KX-7, and Yellow EX-27 (manufactured by Mitsui Toatsu K.K.); AIZEN SOT Yellow-1, AIZEN SOT Yellow-3, and AIZEN SOT Yellow-6 (all manufactured by Hodogaya Chemical Co., Ltd.); MACROLEX Yellow 6G and MACROLEX FLUOR. Yellow 10GN (all manufactured by Bayer Japan); KAYASET Yellow SF-G, KAYASET Yellow 2G, KAYASET Yellow A-G, and KAYASET Yellow E-G (all manufactured by Nippon Kayaku Co., Ltd.); DAIWA Yellow 330HB (manufactured by Daiwa Dyestuff Mfg. Co., Ltd.); HSY-68 (manufactured by Mitsubishi Chemical Corporation); and SUDAN Yellow 146 and NEOPEN Yellow 075 (all manufactured by BASF Japan Ltd.).

Examples of black dyes include MS Black VPC (manufactured by Mitsui Toatsu K.K.); AIZEN SOT Black-1 and AIZEN SOT Black-5 (manufactured by Hodogaya Chemical Co., Ltd.); RESORIN Black GSN 200% and RESOLIN Black BS (all manufactured by Bayer Japan); KAYASET Black A-N (manufactured by Nippon Kayaku Co., Ltd.); DAIWA Black MSC (manufactured by Daiwa Dyestuff Mfg. Co., Ltd.); HSB-202 (manufactured by Mitsubishi Chemical Corporation); and NEPTUNE Black X60 and NEOPEN Black X58 (all manufactured by BASF Japan Ltd.).

The content of the pigment or the dye is preferably from 0.1 to 20% by mass, more preferably from 0.4 to 10% by mass based on the weight of the actinic ray-curable inkjet ink. If the content of the pigment or the dye is too low, the coloring of the resulting image may be insufficient, and if it is too high, the ink may have increased viscosity and reduced ejectability.

### [Other Components]

The actinic ray-curable inkjet ink may further contain other components, if necessary. The other components may be, for example, various additives or other resins. Examples of the additives include surfactants, leveling additives, matting agents, ultraviolet absorbers, infrared absorbers, antibacterial agents, and basic compounds for enhancing the storage stability of the ink. Examples of the basic compounds include basic alkali metal compounds, basic alkaline earth metal compounds, and basic organic compounds such as amines. Examples of other resins include resins for adjusting the physical properties of the cured film, such as polyester resins, polyurethane resins, vinyl resins, acrylic resins, and rubber resins.

The actinic ray-curable inkjet ink can be obtained by mixing the actinic ray-curable compound, the photopolymerization initiator, the two waxes, and optional components under heating. The resulting mixture liquid is preferably filtered with a given filter.

The inkjet ink of the present invention containing the specific components described above has a gelation temperature lower than that of the conventional ink, and preferably has a gelation temperature of 40 to 60°C, more preferably 45 to 50°C. Such a lowered gelation temperature makes possible low-temperature printing.

### 2. Inkjet recording method

The inkjet recording method of the present invention includes at least the following two steps.
(1) a step of ejecting the actinic ray-curable inkjet ink of the present invention onto a recording medium and
(2) a step of applying actinic rays to the ink ejected on the recording medium to cure the ink.

### <Step (1)>

In the step (1), droplets of the inkjet ink are ejected from an inkjet head and landed on the recording medium. The ink used should be the actinic ray-curable inkjet ink described above.

The method for the ejection from the inkjet head may be any of an on-demand method and a continuous method. Examples of on-demand type inkjet heads include electro-mechanical conversion type heads including single cavity type heads, double cavity type heads, bender type heads, piston type heads, share mode type heads, and shared wall type heads; and electro-thermal conversion type heads including thermal ink jet type heads and Bubble Jet (a registered trademark of Canon Inc.) type heads.

Droplets of the inkjet ink may be ejected from the inkjet head while being heated, so that the ejection stability can be improved. The temperature of the inkjet ink being ejected is preferably from 35°C to 100°C, more preferably from 35°C to 80°C in order to improve the ejection stability. In order to further improve the ejection stability, the inkjet ink is preferably ejected at an ink temperature that allows the inkjet ink to have a viscosity of 7 mPa·s to 15 mPa·s, more preferably 8 mPa·s to 13 mPa·s.

An example of a method for heating the inkjet ink to a predetermined temperature includes using, for example, any of a panel heater, a ribbon heater, and warming water to heat, to a predetermined temperature, at least one of: an ink supply system including an ink tank constituting the head carriage, a supply pipe, and a front chamber ink tank immediately in front of the head; piping with a filter; a piezo head; and other parts.

In order to increase the recording speed and enhance the image quality, the droplet amount of the inkjet ink being ejected is preferably from 2 pL to 20 pL.

Various types of printing paper and various synthetic resins conventionally used in various applications are all candidates for the recording medium for use in the inkjet recording method of the present invention. Specific examples include substrates made of paper, such as plain paper used in copying and other applications, wood-free paper used in offset printing, coated paper, and art paper, coated paper obtained by coating both sides of a paper base with resin or other materials, various types of laminated paper, synthetic paper, and thin corrugated paper, and various nonabsorbable plastics and films thereof used in soft packaging. Examples of various plastic films include PET films, OPS films, OPP films, ONY films, PVC films, PE films, and TAC films. Besides them, other materials such as metals and glass may also be used to form the recording medium.

In the inkjet recording method of the present invention, the ink droplets landed on the recording medium are cured, in which the recording medium has a temperature (substrate temperature) in the range of 25°C to 40°C. The inkjet ink used in the inkjet recording method of the present invention contains the two waxes that form a eutectic as a gelling agent. The use of a combination of the two waxes that form a eutectic allows the ink of the present invention to have a lowered gelation temperature, which makes possible printing with high image quality even when the recording medium is not heated to a high temperature, for example, exceeding 40°C.

In the present invention, the temperature of the recording medium is set within the range of 25°C to 40°C, preferably 25°C to 35°C. The use of the actinic ray-curable inkjet ink of the present invention can eliminate the need for heating the recording medium to a conventional high temperature (e.g., 70°C), which makes it possible to save energy consumption for heating even when printing is performed on thick paper such as thin corrugated paper thicker than ordinary coated paper. In addition, this can reduce the time required to heat the substrate to a desired temperature, which can improve the productivity. In addition, this makes it possible to perform printing on, for example, low-heat-resistance recording media easily deformable at high temperature, which can expand the variety of substrates suitable for use as recording media.

Heating is not always necessary as long as the recording medium has a temperature in the range of 25°C to 40°C. If necessary, the recording medium may be heated using, for example, any of various heaters and heating rollers, which are of a contact type for heating the recording medium, and lamps, which are of a non-contact type for heating the front or back side of the recording medium. The means for heating the recording medium in a contact manner is usually arranged on the back side of the recording medium.

### <Step (2)>

In the step (2), actinic rays are applied to the ink ejected on the recording medium to cure the ink. This step photo-cures the actinic ray-curable compound in the inkjet ink.

Examples of the actinic rays to be applied include ultraviolet rays, near ultraviolet rays, and natural light (including light obtained through a filter). Preferably, the actinic rays are ultraviolet rays. Examples of ultraviolet radiation sources that can be used include mercury lamps, metal halide lamps, excimer lasers, ultraviolet lasers, cold cathode tubes, hot cathode tubes, black lights, and light emitting diodes (LEDs), among which band-shaped metal halide lamps, cold cathode tubes, hot cathode tubes, mercury lamps, or black lights are preferred, and LEDs are particularly preferred because of their very long lifetime and low cost.

In general, however, LEDs are single-wavelength light sources and tend to have lower irradiance than that of light sources having a plurality of bright line spectra, such as high-pressure mercury lamps. In the case of curing by radical polymerization, low irradiance can increase the rate of deactivation caused by coupling between the radicals and oxygen. This can hinder the curing even if the irradiation time is extended with the total dose kept at the same level. Therefore, inkjet inks are required to be curable at a low irradiance with a low total dose.

LEDs can be turned on instantaneously and have advantages such as long life, little radiant heat, ease of light quantity control, very narrow emission wavelength width (half-value width), and low power consumption. The wavelength of the irradiation light source is preferably from 280 to 420 nm, more preferably from 350 to 410 nm. The above wavelength is relatively long in the ultraviolet region and has relatively high safety.

The total dose applied to the droplets of the inkjet ink landed on the recording medium is preferably in the range of 10 to 500 mJ/cm². This range is advantageous in terms of, for example, energy saving, space saving, and cost.

The light from the actinic ray radiation source preferably has an irradiance of 8 W/cm² or less, more preferably 2 W/cm² or less, on the recording medium. Light with an irradiance higher than 8 W/cm² can generate a relatively large amount of heat and thus can easily deform a recording medium with low heat resistance. In addition, such light can cause a problem such as an increase in light leakage or curing of the ink on the head nozzle surface. In addition, high irradiance light can increase the energy consumption, light source space, and cost.

The method of applying actinic rays is not limited and may be, for example, the method described below. Light sources are provided on both sides of the head unit. Scanning is performed by a shuttle method using the head and the light sources so that the light is applied to the ink a certain time after the landing of the ink. In addition, light is also applied from another light source not capable of being driven, so that the curing is completed (see JP 60-132767 A). Alternatively, light may be applied using an optical fiber, or ultraviolet rays from a light source may be collimated, then reflected by a mirror surface provided on the side of the head unit, and then applied to the recording portion (see US 6,145,979).

In addition, the actinic rays may be applied in two stages. The first application of the actinic rays is preferably performed within 0.001 to 1.0 second after the landing of the ink droplets on the recording medium P. The second application of the actinic rays only has to be performed after the first application. In other words, the second application only has to be performed downstream of the first application section with respect to the recording medium feed direction. The total dose (D1) per unit area of the recording medium in the first application is preferably lower than the total dose (D2) per unit area of the recording medium in the second application. Namely, D1 < D2 is preferred. When the actinic rays are applied in two stages, an image with increased hardness can be formed with less bleeding.

In the inkjet recording method of the present invention, the ink film formed by landing the ink on the recording medium and curing the ink by the application of the actinic rays preferably has a total thickness of 0.1 to 5 µm. The term "the total thickness of the ink film" means the maximum thickness value of the film of the ink drawn on the recording medium. The total thickness of the ink film is preferably from 0.1 to 5 µm regardless of whether the ink film is monochrome, two-colored (secondary color), three-colored, or four-colored (white ink base).

### Examples

Hereinafter, the present invention will be more specifically described with reference to examples, which, however, are not intended to limit the present invention. As used in the examples, the term "parts" or"%" refers to "parts by mass" or "% by mass" unless otherwise specified.

### <Preparation of Pigment Dispersion 1>

The additives shown below were sequentially mixed and dispersed to form magenta pigment dispersion 1 containing 21% by mass of a magenta pigment.

The compounds shown below were added to a stainless steel beaker and then dissolved by heating and stirring for 1 hour while being heated on a hot plate at 65°C.
Pigment dispersing agent: AJISPER PB824 (manufactured by Ajinomoto Fine-Techno Co., Ltd.) 9 parts
Actinic ray-curable compound: Tripropylene glycol diacrylate 70 parts
Polymerization inhibitor: Irgastab UV 10 (manufactured by Ciba Japan K.K.) 0.02 parts

Subsequently, after the resulting solution was cooled to room temperature, 21 parts of the magenta pigment shown below was added to the solution. The resulting mixture and 200 g of zirconia beads with a diameter of 0.5 mm were added to a glass bottle. After the glass bottle was tightly stoppered, the mixture was dispersed for 8 hours using a paint shaker. Subsequently, the zirconia beads were removed, so that pigment dispersion 1 was obtained.

Magenta pigment: Pigment Red 122 (Chromofine Red 6112JC manufactured by Dainichiseika Color & Chemicals Mfg. Co., Ltd.)

### <Preparation of ink>

### (Preparation of ink 1)

The additives shown below were sequentially mixed and then heated to 80°C and stirred for 30 minutes. Subsequently, the resulting solution was filtered with a #3000 mesh metal filter under heating at 80°C and then cooled to give ink 1.
Actinic ray-curable compound: A-400 (polyethylene glycol #400 diacrylate, manufactured by Shin-Nakamura Chemical Co., Ltd.) 32.0 parts
Actinic ray-curable compound: SR49 (4EO-modified pentaerythritol tetraacrylate, manufactured by SARTOMER) 17.0 parts
Actinic ray-curable compound: SR499 (6EO-modified trimethylolpropane triacrylate, manufactured by SARTOMER) 17.9 parts
Wax: Stearyl stearate 1.5 parts
Wax: Ethylene glycol distearate 1.5 parts
Polymerization inhibitor: Irgastab UV10 (manufactured by Ciba Specialty Chemicals Inc.) 0.1 parts
Photopolymerization initiator: TPO (phosphine oxide, DAROCURE TPO, manufactured by Ciba Specialty Chemicals Inc.) 6.0 parts
Photopolymerization initiator aid: ITX (isopropyl thioxanthone, Speedcure ITX, manufactured by Lambson Ltd.) 2.0 parts
Photopolymerization initiator aid: EDB (amine aid, Speedcure EDB, manufactured by Lambson Ltd.) 3.0 parts
Pigment dispersion 1: 19.0 parts

### (Preparation of inks 2 to 16)

Inks 2 to 16 were prepared as in the preparation of ink 1, except that the type and added amount of the waxes were changed as shown in Table 2 or 3. When the total added amount of the waxes was 6.0 parts, the added amount of A-400 as an actinic ray-curable compound was changed to 29.0 parts.

### (Preparation of inks 17 to 24)

Inks 17 to 24 were prepared as in the preparation of ink 1, except that the type and added amount of the waxes were changed as shown in Table 4. When the total added amount of the waxes was 6.0 parts, the added amount of A-400 as an actinic ray-curable compound was changed to 29.0 parts.

### (Preparation of inks 25 to 32)

Inks 25 to 32 were prepared as in the preparation of ink 1, except that the type and added amount of the waxes were changed as shown in Table 5. When the total added amount of the waxes was 6.0 parts, the added amount of A-400 as an actinic ray-curable compound was changed to 29.0 parts.

### (Preparation of inks 33 to 46)

Inks 33 to 46 were prepared as in the preparation of ink 1, except that only one wax was used as shown in Table 6. When the total added amount of the waxes was 6.0 parts, the added amount of A-400 as an actinic ray-curable compound was changed to 29.0 parts.

Table 1 shows the details of the waxes used in the preparation of inks 1 to 46.

**[Table 1]**

| Wax | | Trade name (manufacturer) | Temperature for saturation solubility 0.4% | Number of linear chain carbon atoms |
|---|---|---|---|---|
| 1 | Stearyl stearate | EXCEPARL SS (Kao Corporation) | 41.8 | C17-C18 |
| 2 | Ethylene glycol distearate | EMALEX EG-di-S (Nihon Emulsion Co., Ltd.) | 40.1 | C17-C17 |
| 3 | Behenyl stearate | Behenyl stearate (Sigma Aldrich) | 49.8 | C17-C21 |
| 4 | 18-pentatriacontanone | KAOWAX T 1 (Kao Corporation) | 52.5 | C17-C17 |
| 5 | Behenyl behenate | (Wako Pure Chemical Industries, Ltd.) | 54.9 | C21-C22 |
| 6 | 12-tricosanone | 12-tricosanone (Tokyo Chemical Industry Co., Ltd.) | 26 | C11-C11 |
| 7 | Ethylene glycol dilaurate | EMALEX EG-di-L (Nihon Emulsion Co., Ltd.) | 25°C or less | C11-C11 |

### <Evaluation of Waxes>

### (Eutectic point)

(1) Sample preparation: Two waxes were weighed in a predetermined ratio with an electronic balance and added to a stainless steel pot. The mixture in the pot was stirred for 15 minutes while being heated at 100°C with a hot stirrer. Subsequently, the waxes were cooled at room temperature, and the resulting solid was used as a sample.
(2) Melting point measurement: 3.0 mg of the resulting sample was analyzed by DSC at a rate of temperature decrease of 5°C/min from 120°C to 30°C. The melting point was defined as the temperature at the intersection of the baseline and the rising part of the precipitation peak.
(3) Phase diagram preparation: The above steps (1) and (2) were performed using different content ratios between the two waxes, and the melting point of each resulting composition was measured. A phase diagram was prepared by plotting the composition of the gelling agent on the horizontal axis and plotting the melting point of each composition (obtained by the steps (1) and (2)) on the vertical axis representing temperature. (Note that some compositions showed two melting points, and in such cases, only the liquidus curve was plotted.) When such a phase diagram had a point at which the melting point reached a minimum, it was determined that the two waxes were able to form a eutectic, and the composition at which the melting point reached a minimum was denoted as a eutectic point (see (A) of Fig. 1). On the other hand, when the gelation temperature varied as the composition varied in the resulting phase diagram, the two waxes were not able to form a eutectic (see (B) of Fig. 1).

### (Saturation solubility)

(1) The additives (the actinic ray-curable compounds, polymerization inhibitor, photopolymerization initiator, and photopolymerization initiator aid) shown below, which were the same as those used in the preparation of the ink, except for the waxes, were sequentially mixed, heated to 80°C, and stirred for 30 minutes to form a solution.
   Actinic ray-curable compound: A-400 (polyethylene glycol #400 diacrylate, manufactured by Shin-Nakamura Chemical Co., Ltd.) 32.0 parts
   Actinic ray-curable compound: SR49 (4EO-modified pentaerythritol tetraacrylate, manufactured by SARTOMER) 17.0 parts
   Actinic ray-curable compound: SR499 (6EO-modified trimethylolpropane triacrylate, manufactured by SARTOMER) 17.9 parts
   Actinic ray-curable compound: SR306H (tripropylene glycol diacrylate, manufactured by SARTOMER) 22.0 parts
   Polymerization inhibitor: Irgastab UV10 (manufactured by Ciba Specialty Chemicals Inc.) 0.1 parts
   Photopolymerization initiator: TPO (phosphine oxide, DAROCURE TPO, manufactured by Ciba Specialty Chemicals Inc.) 6.0 parts
   Photopolymerization initiator aid: ITX (isopropyl thioxanthone, Speedcure ITX, manufactured by Lambson Ltd.) 2.0 parts
   Photopolymerization initiator aid: EDB (amine aid, Speedcure EDB, manufactured by Lambson Ltd.) 3.0 parts
(2) A wax was added to the resulting solution to form a sample for measurement. The added amount of the wax was in the range of 0.1 to 5.0%. DSC was performed in which the sample was heated until the wax was completely dissolved, the sample was cooled after the wax was completely dissolved, and the temperature was measured when the solid phase started to precipitate. A solubility curve was prepared by plotting the precipitation temperature against the added amount (solubility) of the wax, and the temperature at which the saturation solubility reached 0.4% was read from the curve.

### (Measurement of gelation temperature)

The gelation temperature of each ink was determined by measuring temperature-dependent changes in the dynamic viscoelasticity of the ink using a rheometer. Specifically, a curve of temperature-dependent changes in viscosity was obtained when each ink was heated to 100°C and then cooled to 20°C under the conditions of a shear rate of 11.7 (/s) and a rate of temperature decrease of 0.1°C/s, and the gelation temperature was defined as the temperature at which the viscosity reached 200 mPa·s in the resulting curve of temperature-dependent changes in viscosity.

The rheometer used was a stress-controlled rheometer Physica MCR series manufactured by Anton Paar. The diameter of the cone plate was 75 mm, and the cone angle was 1.0°.

### <Image forming method>

Using each of prepared inks 1 to 46, a monochrome image was formed by a line inkjet recording apparatus. The temperature of the inkjet head of the inkjet recording apparatus was set at 80°C. The temperature of the recording medium (OK Top Coat, basis weight 128 g/m², manufactured by Oji Paper Co., Ltd.) was adjusted to 35°C, and outline characters and solid images of 5 cm × 5 cm were printed on the recording medium. After the images were formed, the ink was cured by irradiating the images with ultraviolet light from an LED lamp (water-cooled LED, 395 nm, manufactured by Phoseon Technology) disposed downstream of the recording apparatus.

The ejection recording head used was a piezoelectric head with 512 nozzles (256 nozzles × 2 rows, staggered arrangement, one row nozzle pitch 360 dpi) and a nozzle diameter of 20 µm. The ejection conditions were such that the amount of one droplet was 2.5 pl. The droplets were ejected at a rate of about 6 m/s, and the recording was performed at a resolution of 1,440 dpi × 1,440 dpi. The recording speed was 500 mm/s. The image formation was performed in an environment at 23°C and 55%RH. dpi is the number of dots per 2.54 cm.

### (Blooming)

The solid images of 5 × 5 cm printed under the above conditions were stored in an environment at 40°C for 1 month. After the storage, the images were visually observed and evaluated for blooming according to the following criteria.
○: No precipitate is observed on the image surface.
Δ: Slight precipitates present on the image surface are visually observable.
×: The image surface is covered with a powdery material, which visually clearly observable.

### (Character quality)

Using the above image forming method, Japanese kanji characters " 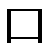 ," " 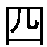 ," " 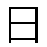 ," " 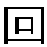 ," " 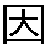 ," " 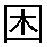 ," " 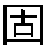 ," " 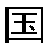 ," " 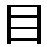 ," " 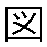 ," and " 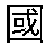 " were printed as outline characters on the recording medium. The outline characters were printed in 3-point and 5-point MS Mincho font at a resolution of 1,400 dpi × 1,440 dpi. The printed character images were visually observed. The character quality was evaluated on the basis of the following criteria.
○: All of the 3-point outline characters are clearly recorded in detail.
Δ: The 3-point outline characters are only partially legible, but all of the 5-point outline characters are legible.
×: Even some of the 5-point outline characters are illegible.

### (Image quality)

The solid images of 5 × 5 cm printed under the above conditions were visually checked for variations in gloss and occurrence of a granular cured film.
**⊙**: The gloss is uniform, and the graininess is low.
○: The gloss is slightly uneven, but the graininess is low.
Δ: The gloss is uneven, but the graininess is low.
×: The gloss is uneven, and the graininess is high.

Tables 2 to 6 show the conditions and evaluation results in the respective examples.

**[Table 2]**

| Ink | | 1 | 2 | 3 | 4 | 5 | 6 | 7 | 8 |
|---|---|---|---|---|---|---|---|---|---|
| Components other than polymerizable compound etc. | | 97.00 | 97.00 | 97.00 | 94.00 | 97.00 | 97.00 | 97.00 | 94.00 |
| Wax 1 | Stearyl stearate | 1.50 | 1.00 | 2.00 | 3.00 | | | | |
| Wax 2 | Ethylene glycol distearate | 1.50 | 2.00 | 1.00 | 3.00 | 1.50 | 1.00 | 2.00 | 3.00 |
| Wax 3 | Behenyl stearate | | | | | 1.50 | 2.00 | 1.00 | 3.00 |
| Wax 4 | 18-pentatriacontanone | | | | | | | | |
| Wax 5 | Behenyl behenate | | | | | | | | |
| Wax 6 | 12-tricosanone | | | | | | | | |
| Wax 7 | Ethylene glycol dilaurate | | | | | | | | |
| Properties of wax | Eutectic | ○ | ○ | ○ | ○ | ○ | ○ | ○ | ○ |
| | Saturation solubility | ○ | ○ | ○ | ○ | ○ | ○ | ○ | ○ |
| | Number of linear chain carbon atoms | ○ | ○ | ○ | ○ | ○ | ○ | ○ | ○ |
| Evaluation items | Gelation temperature | 45.0°C | 44.2°C | 45.0°C | 48.2°C | 49.7°C | 50.6°C | 50.2°C | 57.6°C |
| | Blooming | ○ | ○ | ○ | ○ | ○ | ○ | ○ | ○ |
| | Character quality | ○ | ○ | ○ | ○ | ○ | ○ | ○ | ○ |
| | Image quality | **⊙** | **⊙** | ○ | ○ | **⊙** | ○ | **⊙** | ○ |

**[Table 3]**

| Ink | | 9 | 10 | 11 | 12 | 13 | 14 | 15 | 16 |
|---|---|---|---|---|---|---|---|---|---|
| Components other than polymerizable compound etc. | | 97.00 | 97.00 | 97.00 | 94.00 | 97.00 | 97.00 | 97.00 | 94.00 |
| Wax 1 | Stearyl stearate | | | | | | | | |
| Wax 2 | Ethylene glycol distearate | | | | | 1.50 | 1.00 | 2.00 | 3.00 |
| Wax 3 | Behenyl stearate | 1.50 | 1.00 | 2.00 | 3.00 | | | | |
| Wax 4 | 18-pentatriacontanone | 1.50 | 2.00 | 1.00 | 3.00 | 1.50 | 2.00 | 1.00 | 3.00 |
| Wax 5 | Behenyl behenate | | | | | | | | |
| Wax 6 | 12-tricosanone | | | | | | | | |
| Wax 7 | Ethylene glycol dilaurate | | | | | | | | |
| Properties of wax | Eutectic | ○ | ○ | ○ | ○ | ○ | ○ | ○ | ○ |
| | Saturation solubility | Δ | Δ | Δ | Δ | Δ | Δ | Δ | Δ |
| | Number of linear chain carbon atoms | ○ | ○ | ○ | ○ | ○ | ○ | ○ | ○ |
| Evaluation items | Gelation temperature | 56.3°C | 60.2°C | 56.2°C | 60.1°C | 50.4°C | 55.1°C | 51.2°C | 57.6°C |
| | Blooming | ○ | ○ | ○ | ○ | ○ | ○ | ○ | ○ |
| | Character quality | ○ | ○ | ○ | ○ | ○ | ○ | ○ | ○ |
| | Image quality | ○ | ○ | ○ | ○ | ○ | ○ | ○ | ○ |

**[Table 4]**

| Ink | | 17 | 18 | 19 | 20 | 21 | 22 | 23 | 24 |
|---|---|---|---|---|---|---|---|---|---|
| Components other than polymerizable compound etc. | | 97.00 | 97.00 | 97.00 | 94.00 | 97.00 | 97.00 | 97.00 | 94.00 |
| Wax 1 | Stearyl stearate | 1.50 | 1.00 | 2.00 | 3.00 | 1.50 | 1.00 | 2.00 | 3.00 |
| Wax 2 | Ethylene glycol distearate | | | | | | | | |
| Wax 3 | Behenyl stearate | 1.50 | 2.00 | 1.00 | 3.00 | | | | |
| Wax 4 | 18-pentatriacontanone | | | | | | | | |
| Wax 5 | Behenyl behenate | | | | | 1.50 | 2.00 | 1.00 | 3.00 |
| Wax 6 | 12-tricosanone | | | | | | | | |
| Wax 7 | Ethylene glycol dilaurate | | | | | | | | |
| Properties of wax | Eutectic | × | × | × | × | × | × | × | × |
| | Saturation solubility | ○ | ○ | ○ | ○ | Δ | Δ | Δ | Δ |
| | Number of linear chain carbon atoms | ○ | ○ | ○ | ○ | ○ | ○ | ○ | ○ |
| Evaluation items | Gelation temperature | 54.2°C | 56.3°C | 51.4°C | 60.4°C | 55.6°C | 52.2°C | 58.7°C | 63.5°C |
| | Blooming | ○ | ○ | ○ | ○ | ○ | ○ | ○ | ○ |
| | Character quality | ○ | ○ | ○ | ○ | ○ | ○ | ○ | ○ |
| | Image quality | × | × | × | × | × | × | × | × |

**[Table 5]**

| Ink | | 25 | 26 | 27 | 28 | 29 | 30 | 31 | 32 |
|---|---|---|---|---|---|---|---|---|---|
| Components other than polymerizable compound etc. | | 97.00 | 97.00 | 97.00 | 94.00 | 97.00 | 97.00 | 97.00 | 94.00 |
| Wax 1 | Stearyl stearate | | | | | | | | |
| Wax 2 | Ethylene glycol distearate | | | | | | | | |
| Wax 3 | Behenyl stearate | | | | | | | | |
| Wax 4 | 18-pentatriacontanone | 1.50 | 2.00 | 1.00 | 3.00 | | | | |
| Wax 5 | Behenyl behenate | 1.50 | 1.00 | 2.00 | 3.00 | | | | |
| Wax 6 | 12-tricosanone | | | | | 1.50 | 1.00 | 2.00 | 3.00 |
| Wax 7 | Ethylene glycol dilaurate | | | | | 1.50 | 2.00 | 1.00 | 3.00 |
| Properties of wax | Eutectic | ○ | ○ | ○ | ○ | ○ | ○ | ○ | ○ |
| | Saturation solubility | × | × | × | × | × | × | × | × |
| | Number of linear chain carbon atoms | ○ | ○ | ○ | ○ | × | × | × | × |
| Evaluation items | Gelation temperature | 58.6°C | 57.7°C | 58.4°C | 61.0°C | 30°C or less | 30°C or less | 30°C or less | 30°C or less |
| | Blooming | ○ | ○ | ○ | ○ | × | × | × | × |
| | Character quality | ○ | ○ | ○ | ○ | ○ | ○ | ○ | ○ |
| | Image quality | × | × | × | × | **⊙** | **⊙** | **⊙** | **⊙** |

**[Table 6]**

| Ink | | 33 | 34 | 35 | 36 | 37 | 38 | 39 | 40 | 41 | 42 | 43 | 44 | 45 | 46 |
|---|---|---|---|---|---|---|---|---|---|---|---|---|---|---|---|
| Components other than polymerizable compound etc. | | 97.00 | 97.00 | 97.00 | 97.00 | 97.00 | 97.00 | 97.00 | 94.00 | 94.00 | 94.00 | 94.00 | 94.00 | 94.00 | 94.00 |
| Wax 1 | Stearyl stearate | 3.00 | | | | | | | 6.00 | | | | | | |
| Wax 2 | Ethylene glycol distearate | | 3.00 | | | | | | | 6.00 | | | | | |
| Wax 3 | Behenyl stearate | | | 3.00 | | | | | | | 6.00 | | | | |
| Wax 4 | 18-pentatriacontanone | | | | 3.00 | | | | | | | 6.00 | | | |
| Wax 5 | Behenyl behenate | | | | | 3.00 | | | | | | | 6.00 | | |
| Wax 6 | 12-tricosanone | | | | | | 3.00 | | | | | | | 6.00 | |
| Wax 7 | Ethylene glycol dilaurate | | | | | | | 3.00 | | | | | | | 6.00 |
| Properties of wax | Eutectic | - | - | - | - | - | - | - | - | - | - | - | - | - | - |
| | Saturation solubility | ○ | ○ | ○ | ○ | ○ | × | × | ○ | ○ | ○ | ○ | ○ | × | × |
| | Number of linear chain carbon atoms | ○ | ○ | ○ | ○ | ○ | × | × | ○ | ○ | ○ | ○ | ○ | × | × |
| Evaluation items | Gelation temperature | 49.8°C | 54.2°C | 58.4°C | 63.6°C | 63.0°C | 41.6°C | 30°C or less | 53.4°C | 58.6°C | 61.5°C | 66.0°C | 65.8°C | 50.1°C | 30°C or less |
| | Blooming | ○ | ○ | ○ | ○ | ○ | × | × | Δ | Δ | Δ | ○ | ○ | × | × |
| | Character quality | ○ | ○ | ○ | ○ | ○ | × | × | ○ | ○ | ○ | ○ | ○ | Δ | Δ |
| | Image quality | × | × | × | × | × | × | × | × | × | × | × | × | × | × |

The evaluation results in Tables 2 and 3 show that the use of each of inks 1 to 16, corresponding to the inkjet ink of the present invention, made it possible to perform printing with high image quality and high character quality and to suppress blooming even when the temperature of the recording medium was as low as 35°C.

Printing with particularly high image quality was possible particularly when the two waxes used both satisfied the saturation solubility requirements (namely, to have a saturation solubility of 0.4% at a temperature in the range of 40 to 50°C), although it depends on the amount of the waxes used.

On the other hand, the evaluation results in Table 4 show that the solid images printed with inks each containing waxes not capable of forming a eutectic had uneven gloss and high graininess.

In addition, the evaluation results in Table 5 show that the solid images printed with inks each containing two waxes both not satisfying the saturation solubility requirements (namely, to have a saturation solubility of 0.4% at a temperature in the range of 40 to 50°C) had uneven gloss and high graininess (inks 25 to 28) even though the waxes used in combination had an alkyl group with a linear chain of 15 or more carbon atoms and formed a eutectic. On the other hand, when the waxes used in combination formed a eutectic but had an alkyl group with a linear chain of less than 15 carbon atoms and did not satisfy the saturation solubility requirements, the resulting ink had a very low gelation temperature of 30°C or less and caused blooming at a level high enough to be visually clearly observable (inks 29 to 32).

In addition, inks each containing only one wax were also evaluated. Printing with high image quality was impossible with an ink containing only one wax even when the wax satisfied both the saturation solubility requirements and the requirements for the number of linear-chain carbon atoms in the alkyl group (inks 33 to 37 and 40 to 44). Also when the wax used neither satisfied the saturation solubility requirements nor the requirements for the number of linear-chain carbon atoms in the alkyl group, the resulting ink, such as ink 38, was not acceptable for use in low-temperature printing because it significantly caused a reduction in image quality and blooming even though it had a gelation temperature in an appropriate range (40 to 60°C). In addition, inks containing the gelling agent described above were not suitable for use in printing complex characters because the 3-point outline characters printed with such inks were only partially legible, though the character quality was improved by increasing the amount of the gelling agent (inks 45 and 46).

### Industrial Applicability

Even when printing is performed at low substrate temperature, the inkjet ink of the present invention makes it possible to suppress blooming on prints and to achieve printing with high image quality and high character quality. Therefore, the inkjet ink of the present invention is effective in reducing energy consumption. In addition, the ink of the present invention is printable on, for example, recording media with low heat resistance. Therefore, the use of the ink of the present invention will lead to expansion of the variety of substrates usable as recording media.

## Claims

1. An actinic ray-curable inkjet ink comprising an actinic ray-curable compound, a photopolymerization initiator, a wax A, and a wax B, wherein the waxes A and B each have at least one alkyl chain containing a linear portion, the linear portion of each alkyl chain in the waxes A and B has at least 15 carbon atoms, the wax A has a saturation solubility of 0.4% in the actinic ray-curable compound at a temperature in a range of 40 to 50°C, as determined in accordance with the method disclosed in the description, and the wax B forms a eutectic with the wax A,
with the proviso that the actinic ray-curable inkjet ink is not an actinic ray-curable inkjet ink consisting of 0.5% by weight of distearyl ketone, 1.0% by weight of ethylene glycol distearate, 15.0% by mass of 3PO-modified trimethylolpropane triacrylate, 20.0% by mass of polyethylene glycol 400 diacrylate, 42.6% by mass of 6EO-modified trimethylolpropane triacrylate, 0.1% by mass of bis(2,2,6,6-tetramethyl-1-piperidinyloxy-4-yl)sebacate, 6.0% by mass of diphenyl(2,4,6-trimethylbenzoyl)phosphine oxide, 3.0% by mass of phenylbis(2,4,6-trimethylbenzoyl)phosphine oxide, 0.1% by mass of a polyether-modified silicone fluid having a viscosity of 1600 mm²/s at 25°C, a specific gravity of 1.03 g/cm³ at 25°C, a refractive index n_{D}²⁵ of 1.446, a cloud point of 35°C and a HLB value of 7 (KF-352), and 11.7% by mass of a pigment dispersion prepared from 71 parts by weight of tripropylene glycol diacrylate, 60 parts by weight of titanium oxide and 9 parts by weight of a comb-shaped block copolymer having tertiary amine groups, an amine value of 18 mg KOH/g, an acid value of 8 mg KOH/g, and a density of 1.1 g/ml at 20°C (BYKJET^{®}-9151).

2. The actinic ray-curable inkjet ink according to claim 1, wherein the wax B has a saturation solubility of 0.4% in the actinic ray-curable compound at a temperature in a range of 40 to 50°C, as determined in accordance with the method disclosed in the description.

3. The actinic ray-curable inkjet ink according to claim 1 or 2, wherein a total amount of the waxes A and B is from 0.5% by mass to 10% by mass based on a total amount of the ink.

4. The actinic ray-curable inkjet ink according to claim 3, wherein the waxes A and B are in a mass ratio in a range of 2 : 8 to 8 : 2.

5. The actinic ray-curable inkjet ink according to any one of claims 1 to 4, wherein a combination of the waxes A and B is any one of a combination of stearyl stearate and ethylene glycol distearate, a combination of ethylene glycol distearate and behenyl stearate, a combination of behenyl stearate and 18-pentatriacontanone, and a combination of ethylene glycol distearate and 18-pentatriacontanone.

6. The actinic ray-curable inkjet ink according to claim 5, wherein the combination of the waxes A and B is a combination of stearyl stearate and ethylene glycol distearate or a combination of ethylene glycol distearate and behenyl stearate.

7. An inkjet recording method comprising:
a step of ejecting the actinic ray-curable inkjet ink according to any one of claims 1 to 6 onto a recording medium; and
a step of applying actinic rays to the ink ejected on the recording medium to cure the ink, wherein the recording medium has a temperature in a range of 25°C to 40°C.

## Patentansprüche

1. Mittels aktinischer Strahlung härtbare Tintenstrahltinte, umfassend eine mittels aktinischer Strahlung härtbare Verbindung, einen Photopolymerisationsinitiator, ein Wachs A und ein Wachs B, wobei die Wachse A und B jeweils zumindest eine, einen linearen Abschnitt enthaltende Alkylkette aufweisen, der lineare Abschnitt einer jeden Alkylkette in den Wachsen A und B zumindest 15 Kohlenstoffatome aufweist, das Wachs A bei einer Temperatur im Bereich von 40 bis 50°C eine in Übereinstimmung mit dem in der Beschreibung offenbarten Verfahren bestimmte Sättigungslöslichkeit von 0.4% in der mittels aktinischer Strahlung härtbaren Verbindung aufweist, und das Wachs B ein Eutektikum mit dem Wachs A ausbildet,
mit der Maßgabe, dass es sich bei der mittels aktinischer Strahlung härtbaren Tintenstrahltinte um keine mittels aktinischer Strahlung härtbare Tintenstrahltinte handelt, welche aus 0.5 Gew.-% an Distearylketon, 1.0 Gew.-% an Ethylenglykoldistearat, 15.0 Masse% an 3PO-modifiziertem Trimethylolpropantriacrylat, 20.0 Masse% an Polyethylenglykol-400-diacrylat, 42.6 Masse% an 6EOmodifiziertem Trimethylolpropantriacrylat, 0.1 Masse% an Bis(2,2,6,6-tetramethyl-1-piperidinyloxy-4-yl)sebacat, 6.0 Masse% an Diphenyl(2,4,6-trimethylbenzoyl)phosphinoxid, 3.0 Masse% an Phenylbis(2,4,6-trimethylbenzoyl)phosphinoxid, 0.1 Masse% eines Polyether-modifizierten Silikonfluids mit einer Viskosität von 1600 mm²/s bei 25°C, einer spezifischen Dichte von 1.03 g/cm³ bei 25°C, einem Brechungsindex n_{D}²⁵ von 1.446, einem Trübungspunkt von 35°C und einem HLB-Wert von 7 (KF-352), sowie 11.7 Masse% einer Pigmentdispersion, die aus 71 Gewichtsteilen Tripropylenglycoldiacrylat, 60 Gewichtsteilen Titanoxid und 9 Gewichtsteilen eines kammförmigen Blockcopolymers mit tertiären Amingruppen, einer Aminzahl von 18 mg KOH/g, einer Säurezahl von 8 mg KOH/g und einer Dichte von 1.1 g/ml bei 20°C (BYKJET^{®}-9151) hergestellt worden ist, besteht.

2. Mittels aktinischer Strahlung härtbare Tintenstrahltinte gemäß Anspruch 1, wobei das Wachs B bei einer Temperatur im Bereich von 40 bis 50°C eine in Übereinstimmung mit dem in der Beschreibung offenbarten Verfahren bestimmte Sättigungslöslichkeit von 0.4% in der mittels aktinischer Strahlung härtbaren Verbindung aufweist.

3. Mittels aktinischer Strahlung härtbare Tintenstrahltinte gemäß Anspruch 1 oder 2, wobei die Gesamtmenge der Wachse A und B im Bereich von 0.5 Masse% bis 10 Masse%, bezogen auf die Gesamtmenge der Tinte, beträgt.

4. Mittels aktinischer Strahlung härtbare Tintenstrahltinte gemäß Anspruch 3, wobei die Wachse A und B in einem Massenverhältnis im Bereich von 2:8 bis 8:2 vorliegen.

5. Mittels aktinischer Strahlung härtbare Tintenstrahltinte gemäß einem der Ansprüche 1 bis 4, wobei es sich bei der Kombination der Wachse A und B um eine beliebige Kombination ausgewählt aus einer Kombination von Stearylstearat und Ethylenglykoldistearat, einer Kombination von Ethylenglykoldistearat und Behenylstearat, einer Kombination von Behenylstearat und 18-Pentatriacontanon, und einer Kombination von Ethylenglykoldistearat und 18-Pentatriacontanon handelt.

6. Mittels aktinischer Strahlung härtbare Tintenstrahltinte gemäß Anspruch 5, wobei es sich bei der Kombination der Wachse A und B um eine Kombination von Stearylstearat und Ethylenglykoldistearat, oder um eine Kombination von Ethylenglykoldistearat und Behenylstearat handelt.

7. Tintenstrahlaufzeichnungsverfahren, umfassend:
einen Schritt des Ausstoßens der mittels aktinischer Strahlung härtbaren Tintenstrahltinte gemäß einem der Ansprüche 1 bis 6 auf ein Aufzeichnungsmedium; und
einen Schritt des Applizierens von aktinischen Strahlen auf die auf das Aufzeichnungsmedium ausgestoßene Tinte zwecks Härtung der Tinte, wobei das Aufzeichnungsmedium eine Temperatur im Bereich von 25°C bis 40°C aufweist.

## Revendications

1. Encre durcissable par rayonnement actinique pour jet d'encre, comprenant un composé durcissable par rayonnement actinique, un initiateur de photopolymérisation, une cire A et une cire B, dans laquelle les cires A et B possèdent chacune au moins une chaîne alkyle contenant une portion linéaire, la portion linéaire de chaque chaîne alkyle dans les cires A et B possède au moins 15 atomes de carbone, la cire A possède une solubilité à saturation de 0,4 % dans le composé durcissable par rayonnement actinique à une température dans une plage de 40 à 50 °C, telle que déterminée conformément au procédé divulgué dans la description, et la cire B forme un eutectique avec la cire A,
à la condition que l'encre durcissable par rayonnement actinique pour jet d'encre ne soit pas une encre durcissable par rayonnement actinique pour jet d'encre constituée de 0,5 % en poids de distéaryl cétone, de 1,0 % en poids de distéarate d'éthylène glycol, de 15,0 % en masse de triacrylate de triméthylolpropane modifié par 3PO, de 20,0 % en masse de diacrylate de polyéthylène glycol 400, de 42,6 % en masse de triacrylate de triméthylolpropane modifié par 6EO, de 0,1% en masse de bis(2,2,6,6-tétraméthyl-1-pipéridinyloxy-4-yl)sébacate, de 6,0% en masse d'oxyde de diphényl(2,4,6-triméthylbenzoyl)phosphine, de 3,0 % en masse d'oxyde de phénylbis(2,4,6-triméthylbenzoyl)phosphine, de 0,1 % en masse d'un fluide siliconé modifié par polyéther ayant une viscosité de 1600 mm²/s à 25 °C, une densité de 1,03 g/cm³ à 25 °C, un indice de réfraction n_{D}²⁵ de 1,446, un point de trouble de 35 °C et une valeur d'équilibre hydrophile-lipophile (HLB) de 7 (KF-352), et de 11,7 % en masse d'une dispersion pigmentaire préparée à partir de 71 parties en poids de diacrylate de tripropylène glycol, de 60 parties en poids d'oxyde de titane et de 9 parties en poids d'un copolymère séquencé en forme de peigne ayant des groupes amine tertiaire, un indice d'amine de 18 mg KOH/g, un indice d'acide de 8 mg KOH/g et une densité de 1,1 g/ml à 20 °C (BYKJET^{®}-9151).

2. Encre durcissable par rayonnement actinique pour jet d'encre selon la revendication 1, dans laquelle la cire B possède une solubilité à saturation de 0,4 % dans le composé durcissable par rayonnement actinique à une température dans une plage de 40 à 50 °C, telle que déterminée conformément au procédé divulgué dans la description.

3. Encre durcissable par rayonnement actinique pour jet d'encre selon la revendication 1 ou 2, dans laquelle une quantité totale des cires A et B est de 0,5 % en masse à 10 % en masse sur la base d'une quantité totale de l'encre.

4. Encre durcissable par rayonnement actinique pour jet d'encre selon la revendication 3, dans laquelle les cires A et B sont dans un rapport massique dans une plage de 2:8 à 8:2.

5. Encre durcissable par rayonnement actinique pour jet d'encre selon l'une quelconque des revendications 1 à 4, dans laquelle une combinaison des cires A et B est l'une quelconque parmi une combinaison de stéarate de stéaryle et de distéarate d'éthylène glycol, une combinaison de distéarate d'éthylène glycol et de stéarate de béhényle, une combinaison de stéarate de béhényle et de 18-pentatriacontanone, et une combinaison de distéarate d'éthylène glycol et de 18-pentatriacontanone.

6. Encre durcissable par rayonnement actinique pour jet d'encre selon la revendication 5, dans laquelle la combinaison des cires A et B est une combinaison de stéarate de stéaryle et de distéarate d'éthylène glycol ou une combinaison de distéarate d'éthylène glycol et de stéarate de béhényle.

7. Procédé d'enregistrement par jet d'encre comprenant :
une étape d'éjection de l'encre durcissable par rayonnement actinique pour jet d'encre selon l'une quelconque des revendications 1 à 6 sur un support d'enregistrement ; et
une étape d'application de rayons actiniques sur l'encre éjectée sur le support d'enregistrement pour durcir l'encre, dans lequel le support d'enregistrement possède une température dans une plage de 25 °C à 40 °C.
